# EUROPEAN PATENT APPLICATION

(11) **EP 4 303 856 A1**
(43) Date of publication of application: **10.01.2024**
(21) Application number: 22192778.3
(22) Date of filing: 30.08.2022
(51) Int. Cl.: G09F 21/02, G09F 27/00

(54) **THERMAL INSULATED DELIVERY BOX PROVIDED WITH DISPLAY SCREENS FOR MOTORCYCLES, BICYCLES AND THE LIKE**

(30) Priority: 06.07.2022 BR 102022013490
(71) Applicant: Amaral, Carlos Cesar, London CEP NW10 3LG (GB); Rodrigues Pereira, Silvia, London CEP NW10 3LG (GB)
(72) Inventor: Amaral, Carlos Cesar, London CEP NW10 3LG (GB); Rodrigues Pereira, Silvia, London CEP NW10 3LG (GB)
(74) Representative: Torner, Juncosa I Associats, SL

(57) **Abstract**

The present invention refers to a thermal insulated delivery box provided with display screens for motorcycles, bicycles and the like that, according to the general characteristics thereof, provides the formation of a thermal insulated box (1) in a specific and standalone structure with universal type sealing and based on the integration of video display screens (2), data/image/video processors/controllers (3), a remote transmitter/receiver (4) and power batteries (5) to delivery boxes that carry goods such as food, and are attached to the back of motorcycles, bicycles and the like, in order to provide complete optimization in the set of procedures of conventional delivery boxes provided with thermal insulation, waterproofing protection and safety items, combined with the generation of remote mobile advertising vehicle for a wide variety of advertising and marketing material - remotely managed mobile advertising.

## Description

### Technical Field

The present invention relates to delivery boxes for goods in general, more specifically to an insulated delivery box provided with a display screen for motorcycles, bicycles and the like that, according to the general characteristics thereof, provides, as its basic principle, the formation of a thermal insulated box in a specific, stand-alone structure with universal type sealing and based on the integration of video display screens, data/image/video processors/controllers, a remote transmitter/receiver, and power batteries to delivery boxes that carry goods such as food, and are attached to the back of motorcycles, bicycles and the like, in order to provide, in an extremely practical, safe and accurate manner, complete optimization in the set of procedures of conventional delivery boxes provided with thermal insulation, waterproofing protection, and safety items, combined with the generation of a remote mobile advertising vehicle for a wide variety of advertising and marketing material - remotely managed mobile advertising, and being based on a thermal insulated box of high strength, safety and versatility.

With a specific design and format and easy access for adaptation and user safety, convenience features in handling and functionality, very affordable and, due to its general characteristics and dimensions, easily adaptable to a variety of motorcycles, bicycles, goods, delivery people, marketing ads and locations in general, regardless of the characteristics that they may present.

### Background of the Invention

Nowadays, the greatest drawbacks in routine delivery operations carried out by motorcycles, bicycles and the like with the most varied types of goods and in several different locations is the integrity of the packaged goods, especially in the case of food, the access to the packaged goods, delivery people's safety regarding other vehicles, and the inexistence of advertising material in the delivery boxes with versatility, interaction, durability and safety.

Nowadays, a few types of equipment and devices aiming at reducing or eliminating these inconveniences in delivery boxes are widely known in the state of the art, although none of these are able to achieve, in its fullness, the elimination of such drawbacks, especially integrated with the delivery boxes.

Among these pieces of equipment and devices are adhesive/fluorescent security tapes placed around the boxes as security reflectors, simple insulating papers placed around internal surfaces as thermal insulation, support cords for the box lid arranged on the outside thereof to limit its opening, advertising decals or posters as advertising and marketing material.

Thus, one can easily see that these are pieces of equipment and devices that, despite being widely used in delivery operations, have low visibility to third parties, no strength and durability, low ergonomics, difficult application, no security and low advertising functionality, besides being all based on simple adaptations of boxes to motorcycles, bicycles and the like and not being of universal application for all models.

In this line of action, it has become essential for delivery people through delivery operations and, mainly for those operating food delivery services using motorcycles, bicycles, and the like the structuring of a fully integrated, versatile, practical, safe, easy and accurate integrated structure to these types of vehicles that is capable of allowing optimization in the delivery procedures by increasing delivery people's safety and comfort, and maintaining the integrity and durability of the goods, as well as generating increased profitability for delivery and advertising companies by integrating other forms of services concurrently with the delivery service.

In an extensive review of the literature in order to provide the current state of the art of thermal insulated delivery boxes used in the delivery procedures, mainly by motorcycles, bicycles and the like, object of the present invention, documents relevant to the prior art related to the specific object claimed in the present invention were described, although in none of them the same structural, operational and visual concept claimed by the present thermal insulated delivery box with the integration of innovative technologies using video display screens, data/image/video processors/controllers, a remote transmitter/receiver and power batteries for the delivery boxes, as well as security signage, ergonomics on the box lid and thermal insulation is claimed.

### Description of the Invention

Thus, the present invention is characterized by combining components and procedures in a differentiated concept that meets the various requirements the nature of its use demands, i.e., delivery services using motorcycles, bicycles and the like combined with remote advertising and marketing through images and videos. The concept ensures a thermal insulated box of great efficiency, functionality, strength, durability, safety, versatility, accuracy, economy, hygiene, ergonomics, visibility and interaction due to the excellent aggregate technical qualities, which provide advantages and improvements in the combined procedures of delivery services and remote mobile generation of advertising and marketing material in general, and whose general characteristics differ from the other forms and models widely known in the current state of the art.

In some embodiments, the present invention comprises the use of a modern, efficient, safe and functional thermal insulated box with image and video screens for motorcycles, bicycles and the like formed by a set of properly incorporated electronic, mechanical and vehicle solutions, forming a complete and differentiated thermal insulated box with unique design, great finish details and specific characteristics, is aesthetically pleasing, and which incorporates its own universal type structure of high durability and strength, parallelepipedal shape, and containing a properly integrated and symmetrically arranged plurality of video display screens as advertising and marketing material by means of data/image/video processors/controllers as a processing and distribution element of the received data/images/videos for the display screens, a remote transmitter/receiver as a remote reception element of the data/images/videos for the processor/controller, a plurality of power batteries as power supply elements for the components of the thermal insulated box, a brake light as a rear signage element of the insulated box, supporting straps as a support element for the box lid, an inner tray as an internal protection element for the components of the thermal insulated delivery box, and a GPS tracker as a remote location element for the thermal insulated delivery box, so as to enable the formation of a single, complete and safe assembly, whose internal and external shapes and arrangements enable perfect adaptation to a wide variety of motorcycles, bicycles and the like, as well as video display screens, being specially designed for these purposes.

The overall design of the present thermal insulated delivery box with display screens for motorcycles, bicycles and the like, object of the present invention, is entirely based on its simple and robust structure with a minimum required number of components and extremely simple, safe and optimized operation, combined with fairly practical manufacturing and maintenance procedures so as to generate a practical and efficient thermal insulated delivery box of universal type capable of being directly attached to the back of motorcycles, bicycles and the like that, besides keeping the functionalities of a conventional delivery box by adding thermal insulation, waterproofing protection, safety signage, and lid support, simultaneously integrating the functionalities of a remotely managed mobile advertising vehicle.

In view of this and other points, a thermal insulated delivery box has been developed to be attached/fixed to the back of motorcycles, bicycles and the like, which presents as a great innovation the insertion of a plurality of screens on its side, upper and rear faces, with the possibility of remotely sending information with images and videos through a transmitter/receiver, and the management of said information through a processor/controller, fed by a plurality of batteries, so that it is possible to insert the same images or different images, simultaneously or not, in each of the faces of the thermal insulated delivery box by means of video screens and periodically change the moving or still images, that is, the technical solution of the invention is the possibility of providing remotely managed mobile advertising.

It can be stated that the present thermal insulated delivery box is based on the application of components and processes in a differentiated concept without, however, achieving a high degree of sophistication and complexity, thus making it possible to solve some of the main drawbacks of the other shapes and models known in the state of the art and employed in the delivery services using motorcycles, bicycles and the like, as well as the generation of advertising material, which are located in an operating range in which are very common the limitations on use and application, low efficiency and performance, accidents of different severities, great wear and fragility, low versatility, high cost, low durability and resistance, general high volume and weight, low ergonomics, little flexibility and mobility, and low advertising functionality and versatility.

### Brief Description of the Drawings

The objectives, advantages, and other important characteristics of the patent of invention in question can be more easily understood when read in conjunction with the accompanying drawings, in which:
Fig. 1A is a front perspective view of the thermal insulated delivery box provided with video display screens for motorcycles, bicycles and the like.
Fig. 1B is a rear bottom perspective view of the thermal insulated delivery box provided with video display screens for motorcycles, bicycles and the like.
Fig. 1C is a front view of the thermal insulated delivery box provided with video display screens for motorcycles, bicycles and the like.
Fig. 1D is a rear view of the thermal insulated delivery box provided with video display screens for motorcycles, bicycles and the like.
Fig. 1E is a top view of the thermal insulated delivery box provided with video display screens for motorcycles, bicycles and the like.
Fig. 1F is a bottom view of the thermal insulated delivery box provided with video display screens for motorcycles, bicycles and the like.
Fig. 1G is a right-side view of the thermal insulated delivery box provided with video display screens for motorcycles, bicycles and the like.
Fig. 1H is a left-side view of the thermal insulated delivery box provided with video display screens for motorcycles, bicycles and the like.

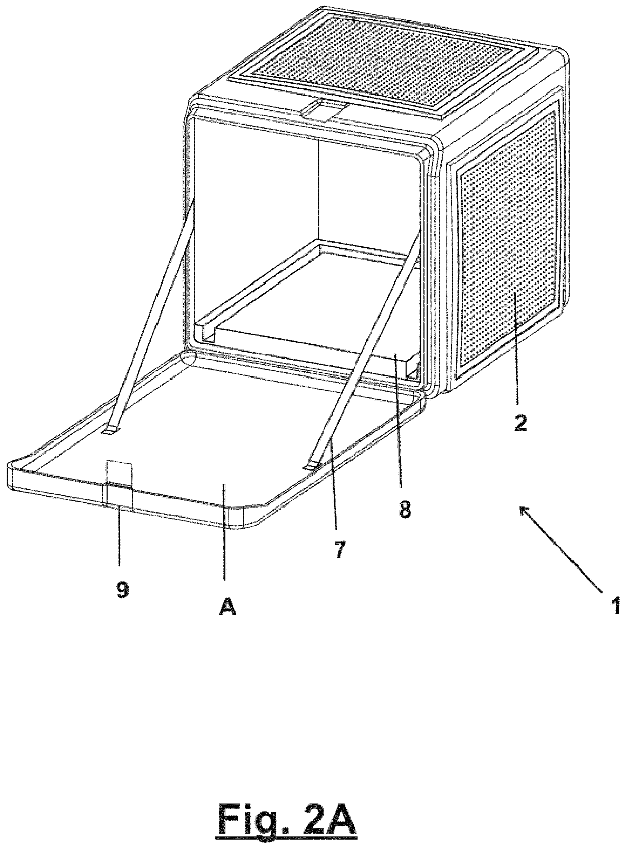

Fig. 2A is a front perspective view of the thermal insulated delivery box provided with video display screens for motorcycles, bicycles and the like in an open disposition.

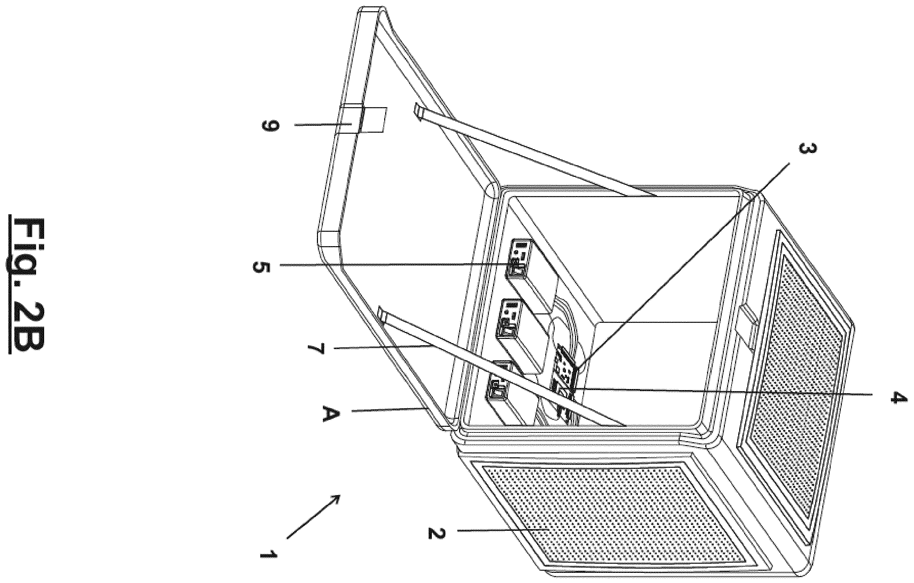

Fig. 2B is a front perspective view of the thermal insulated delivery box provided with video display screens for motorcycles, bicycles and the like in an open disposition without the inner bottom plate.

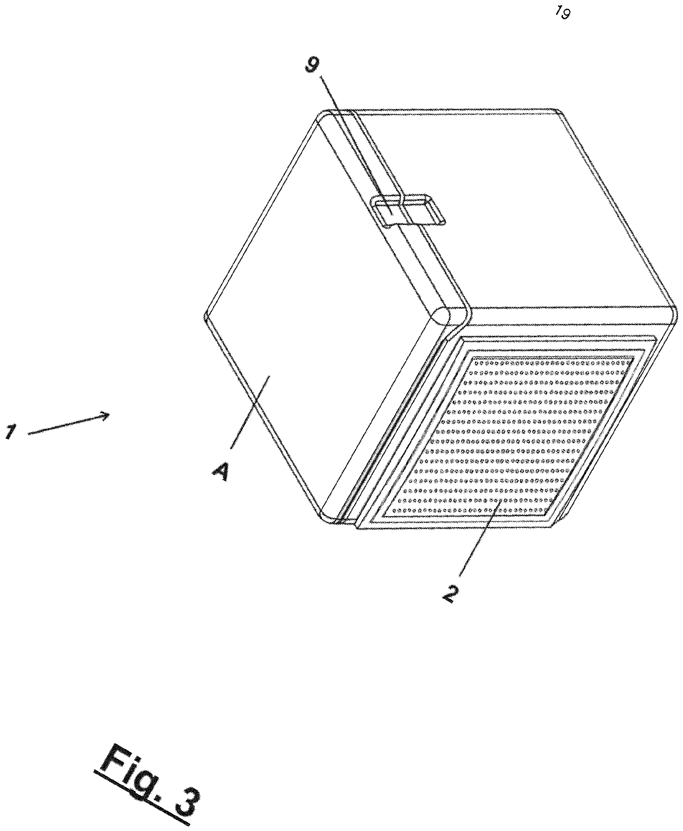

Fig. 3 is a front perspective view of the thermal insulated delivery box provided with video display screens for motorcycles, bicycles and the like in a disposition without the top video screen.

### Detailed Description of the Invention and of Preferred Embodiments

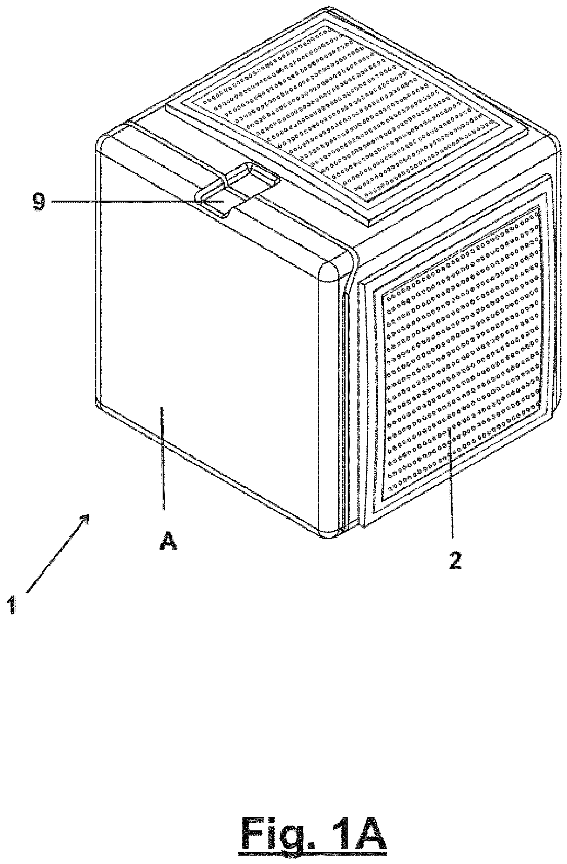

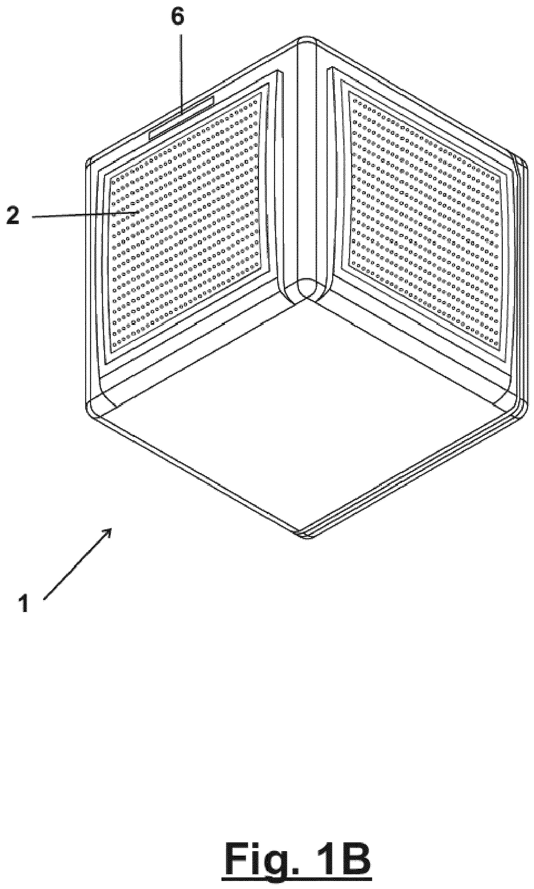

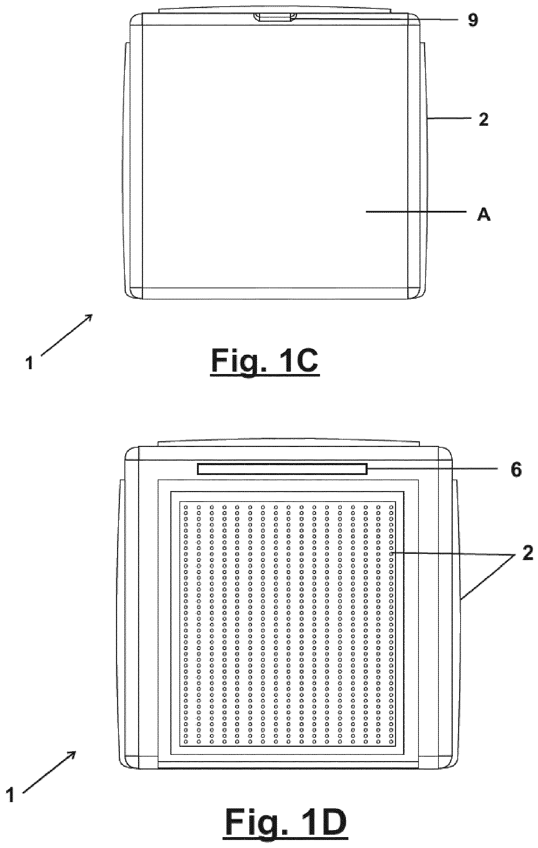

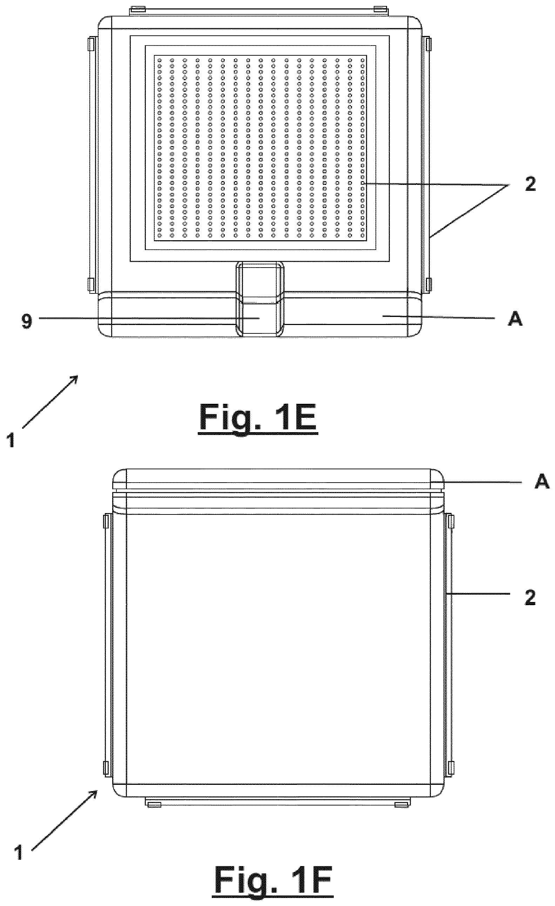

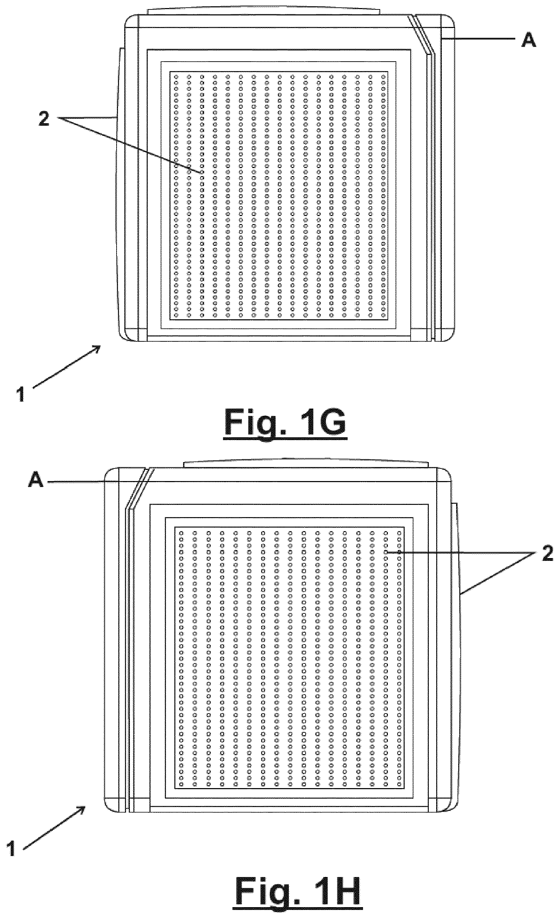

As shown from the accompanying drawings that illustrate and integrate the present descriptive report of the patent of invention "Thermal Insulated Delivery Box Provided with Display Screens for Motorcycles, Bicycles and the Like", Fig. 1A shows the thermal insulated delivery box in general comprising a thermal insulated delivery box complete and with specific characteristics, incorporating its own universal type structure of parallelepipedal shape, high durability and resistance, internal and external shapes and arrangements that adapt to a wide variety of motorcycles, bicycles and the like, and containing a properly integrated an symmetrically arranged plurality of video screens (2) vertically, parallelly and symmetrically arranged on the side, rear and upper faces of the thermal insulated delivery box (1), with the main function of promoting advertising and marketing material; a processor/controller unit (3) symmetrically arranged on the internal underside of the thermal insulated delivery box (1) and interconnected to the video screens (2), with the main function of processing remotely received data/images/videos to the video screens (2); a remote transmitter/receiver unit (4) symmetrically arranged on the internal underside of the thermal insulated delivery box (1) and interconnected to the processor/controller unit (3), with the main function of remotely receiving the data/images/videos for the processor/controller unit (3); a series of power batteries (5) symmetrically arranged on the internal underside of the thermal insulated delivery box (1) and interconnected to the video screens (2), the processor/controller unit (2) and the remote transmitter/receiver unit (4) having the main function of power supplying said components of the thermal insulated delivery box (1); a brake light (6) parallelly and symmetrically centered in the rear face top edge of the thermal insulated delivery box (1), with the main function of auxiliary brake indicator lights for the thermal insulated delivery box (1); supporting straps (7) symmetrically aligned between the inner side edges of the box lid (A) and the front inner side edges of the thermal insulated delivery box (1), with the main function of supporting the lid (A) of the thermal insulated delivery box (1); and an inner tray (8) horizontally, parallelly and symmetrically spaced and encased over the entire length of the internal underside of the thermal insulated delivery box (1), the processor/controller unit (3), the remote transmitter/receiver unit (4) and the series of power batteries (5) being located under its underside, with the main function of protecting said components of the thermal insulated delivery box (1) against contact with goods and users.

The thermal insulated delivery box provided with display screens for motorcycles, bicycles and the like, according to the application needs, may comprise a GPS remote location tracker for the thermal insulated delivery box (1) symmetrically arranged on the internal underside of the thermal insulated delivery box (1) and interconnected to the processor/controller unit (3).

The thermal insulated delivery box provided with display screens for motorcycles, bicycles and the like, according to the application needs, may comprise a security lock (9) symmetrically centered between the top edge of the lid (A) and the front top edge of the thermal insulated delivery box (1), with the main function of locking the lid (A) in the thermal insulated box and preventing the unwanted opening of the thermal insulated delivery box (1).

The thermal insulated delivery box provided with display screens for motorcycles, bicycles and the like, according to the application needs, may comprise a power converter or inverter interconnecting the engine of the motorcycle, electric bicycle or the like to the series of power batteries (5), with the main function of directly supplying power from the engine of the motorcycle, electric bicycle or the like to the power batteries (5) or directly to the display screens (2) and the processor/controller (3) and remote transmitter/receiver (4) units, in the latter case, removing the need of power batteries (5).

The display screens (2) are powered directly by the series of power batteries (5) and are intended to promote mobile advertising by displaying images or videos coming remotely and processed by the processor/controller unit (3) on the faces of the thermal insulated delivery box (1).

The insertion of a processor/controller unit (3) (CPU) inside the thermal insulated delivery box (1) has the purpose of managing and processing the images that are remotely received by the processor/controller unit (3) and will be displayed by the video screens (2).

The insertion of a remote telecommunication transmitter/receiver unit (4) in the processor/controller unit (3) with a Wi-Fi device has the purpose of allowing the display screens to receive the signal through the internet, and sending the information in images, texts, or videos remotely, online and at any time, according to the client's convenience.

More specifically, the thermal insulated delivery box (1) shows test results on resistance, durability, ergonomics, versatility and, mainly, on the physical and thermal integrity of the goods packaged as food that are far superior to those of other delivery boxes found in the market, plus having the advantage of adding to its external framework a means to remotely promote mobile advertising and marketing material of beautiful design and integration to motorcycles, bicycles and the like, as well as high security and high capacity of image generation and interaction.

As the thermal insulated delivery box provided with display screens for motorcycles, bicycles and the like has fully integrated components, it can be assembled and disassembled quickly, nothing comes loose or breaks off or gets warped, and a high performance and efficiency is achieved, combined with high durability and complete safety during use. Once fully integrated to the back of motorcycles, bicycles and the like, the components are completely locked and united, thus preventing them from loosening when in use, making the assembly fully available for the delivery services of goods such as food using motorcycles, bicycles and the like together with the remote mobile promotion of advertising and marketing material. The thermal insulated delivery box (1) can be thus used without concerns of any nature, mainly regarding the safety and durability of its components, as well as the safety of its users and the integrity of the goods to be delivered.

In view of the foregoing, the thermal insulated delivery box will be well received by individuals or companies working with delivery services and using motorcycles, bicycles and the like, as well as by advertising and marketing companies, since the thermal insulated delivery box provided with display screens for motorcycles, bicycles and the like has many advantages, such as: great safety, reliability and flexibility in its application; great efficiency and performance due to its general conception; great comfort, convenience and safety for the delivery people; great overall strength and durability, combined with low or no wear of the assembly as a whole; fully accessible costs which provides an optimum cost-benefit ratio; practical and safe use by any delivery person; high range; proper and direct adaptation to different types of motorcycles, bicycles and the like; great mobility and flexibility of the assembly; high operating ergonomics; high capacity of generating and promoting advertising material in a remote and mobile manner; and the certainty of having a thermal insulated delivery box (1) that fully meets the current rules and regulations as well as the basic conditions required to its application.

All such attributes classify the thermal insulated delivery box provided with display screens as a fully versatile, efficient, practical, and safe way to be applied in delivery services of goods such as food together with the remote generation/promotion of a wide range of advertising and marketing material by employing the most different types of motorcycles and bicycles used by delivery people and in the most diverse types of locations, regardless of the general characteristics these may have, not being limited, however, at any time, to the representations herein described; it should be understood in its broad claim scope, i.e., not being limited to the specific form disclosed, and other forms are understood to be fully included within the scope of the attached claims.

## Claims

1. A thermal insulated delivery box provided with display screens for motorcycles, bicycles and the like, **characterized in that** it comprises a thermal insulated delivery box that incorporates a universal type structure of parallelepipedal shape containing integrated and symmetrically arranged:
- a series of video display screens (2) vertically, parallelly, and symmetrically arranged on the side, rear and upper faces of the thermal insulated delivery box (1);
- a processor/controller unit (3) symmetrically arranged on the internal underside of the thermal insulated delivery box (1) and interconnected to the video display screens (2);
- a remote transmitter/receiver unit (4) symmetrically arranged on the internal underside of the thermal insulated delivery box (1) and interconnected to the processor/controller unit (3);
- a series of power batteries (5) symmetrically arranged on the internal underside of the thermal insulated delivery box (1) and interconnected to the video display screens (2), the processor/controller unit (3) and the remote transmitter/receiver unit (4);
- a brake light (6) parallelly and symmetrically centered in the rear face top edge of the thermal insulated delivery box (1);
- supporting straps (7) symmetrically aligned between the inner side edges of the box lid (A) and the front inner side edges of the thermal insulated delivery box (1); and
- an inner tray (8) horizontally, parallelly, and symmetrically spaced and encased over the entire length of the internal underside of the thermal insulated delivery box (1), the processor/controller unit (3), the remote transmitter/receiver unit (4) and the series of power batteries (5) being located under its underside.

2. The thermal insulated delivery box of claim 1, **characterized in that** it comprises a GPS remote location tracker for the thermal insulated delivery box (1) symmetrically arranged on the internal underside of the thermal insulated delivery box (1) and interconnected to the processor/controller unit (3).

3. The thermal insulated delivery box of claim 1 or 2, **characterized in that** it comprises a security lock (9) symmetrically centered between the top edge of the lid (A) and the front top edge of the thermal insulated delivery box (1).

4. The thermal insulated delivery box of claim 1, 2 or 3, **characterized in that** it comprises a power converter or inverter interconnecting the engine of the motorcycle, electric bicycle or the like to the series of power batteries (5) or directly to the video display screens (2) and the processor/controller (3) and remote transmitter/receiver (4) units.
